# EUROPEAN PATENT APPLICATION

(11) **EP 1 759 578 A1**
(43) Date of publication of application: **07.03.2007**
(21) Application number: 06018421.5
(22) Date of filing: 04.09.2006
(51) Int. Cl.: A01G 9/02

(54) **Vertical garden**

(30) Priority: 04.09.2005 NL 1029873; 31.05.2006 NL 1031919
(71) Applicant: Copijn Utrecht Holding B.V., 3566 ME Utrecht (NL)
(72) Inventor: Meyling, Marten Otto, NL-3566 ME Utrecht (NL); Verloop, Hendrik Nicolaas Frederik, NL-3566 ME Utrecht (NL)
(74) Representative: Assendelft, Jacobus H.W.

(57) **Abstract**

The invention is concerned with a prefabricated assembly of rigid/inflexible sheet or other body with large surface and mounted thereon a cloth, web, foil or such supple flexible and/or foldable element with large surface, wherein said element contains spaces for plant roots made therein by making incisions in said element, to make a vertical garden. Present are a layer offering the plants support and a layer allowing root growth therein and between these two layers a gas permeable and moisture retarding layer is present. A layer of the element that is cut for the roots is stretchable to offer additional space, and the gas permeable/moisture retarding layer is also cut. The space for the roots is limited to provide pockets with downward decreasing width.

## Description

This invention concerns growing plants at a substantially vertical surface, wherein (almost) no soil/substrate is required. Thus, a vertical garden can be provided.

For background information in this field, reference is made to FR2, 747, 265. It discloses a web suspending in front of a wall and at a distance in front of it inclined, horizontal slats. Plants are with their roots located in the wedge shaped spaces between the web and the slats. The plants receive artificially via the web water and dissolved nutriments. A vegetation wall can thus be provided, without having to use climbers. The wall can also show a great variety of plants. Thus a mountainside with vegetation can be simulated.

With another technique known from the field, three different, on top of each other lying, separate supple layers are used (felt cloth 5 mm thickness, moisture retarding gas permeable foil 20 micron thickness and geo textile 200 micron thickness) which are suspended in front of a vertical panel mounted to the vegetation wall. After that the front, reasonably tension resistant, layer of felt cloth and the moisture retarding foil behind it are horizontally cut through at the desired location of a plant during planting. Through said provided opening the roots are located in the space between foil and geo textile. During planting, based on experience of the person planting the vertical wall, the three layers are locally fixed to the vertical wall by pushing a staple through all three layers into the panel. These staples are randomly located close to or at a distance from each other. With these staples, sometimes the space in which the roots project, is delimited sideways and/or downwards. The pattern of the horizontals cuts and of the staples is irregular and without structure. Compared to FR2,747,265, slats in front of the layers are absent. The front layer offers now, in combination with fixedly stapling, the required rigidity for the plant.

The object of the invention is versatile and concerns, i.a., one or more of the following aspects: easy to install; limitation of the work to be carried out on site; designed for large surfaces; long life; robust; cheap to produce and/or apply; spaces to receive roots can conveniently be provided accurately in a regular pattern; providing an optimum location to grow plants such that they get sufficient opportunity to grow and maintain a good quality.

The invention is on the one hand a prefabricated cloth, foil, web or such supple flexible and/or foldable element of large surface (hereafter: cloth) designed such that spaces for plant roots can easily be made in advance or during application to the vertical wall at desired locations, by providing straight cuts without cutting the complete thickness of the cloth. This cloth can e.g. be supplied as a coil and suspended from the rigid sub surface, such as vertical wall.

The invention is on the other hand a prefabricated unit of rigid/inflexible sheet or another body of large surface (hereafter: sheet) and onto that a cloth, web, foil or such supple flexible and/or foldable element of large surface (hereafter: cloth) attached, wherein said cloth contains spaces for plant roots, or such spaces can easily be provided by making straight cuts without cutting the complete thickness of the cloth. Preferably one face of the sheet is at least substantially covered by the cloth. This assembly can directly be mounted to the vertical wall.

The invention further concerns application of so called root cloth, i.e. a layer allowing that plant roots grow into it and make a branched network, as is known from substrate growing onto e.g. glass wool. Such root cloth can also serve to supply water to the plants. Preferably such root cloth is a mat (also called non-woven or felt) or such non-woven web and/or has a thickness of at least 1 or at least 2 or at least about 5 mm. The root cloth can offer the opportunity of water reservoir and transport. This offers the opportunity of minimum water consumption, without having to use a water recirculation system.

The invention also concerns one or more of the subjects from the three paragraphs directly above in combination.

The cloth preferably contains a layer offering the plant support and a layer allowing root growth into it, which latter layer comes closer to the vertical wall. Preferably a gas permeable, moisture retarding layer is present between said two layers. There are possibly one or more further layers. E.g. a layer with which the cloth can be glued onto the rigid sub surface, such as the sheet or vertical wall. This latter layer or another layer can serve to offer the cloth strength. The layer that is (completely) cut to make spaces for the plant roots, can preferably be stretched slightly to offer more space for the plant roots. Preferably the gas permeable, moisture retarding layer is also (completely) cut to make spaces for the roots accessible.

Preferably the spaces for the roots are delimited sideways and/or downwards (e.g. by stitching or other means) such that the plant is supported by it, preferably without substantially obstructing root growth. Such spaces can then be viewed as pockets. These pockets preferably have a width that decreases downward (related to the case while mounted to the vertical wall). Hereafter the expression "pocket" is used to indicate the space for the roots, even if it is not delimited such as meant in this paragraph.

Each layer can be composed of natural or artificial (e.g. polymer) fibres or mixtures, woven or as a mat (i.e. woven or non-woven). On the other hand, one or more layers can be made of foil that is possibly perforated. Layer thicknesses can range from tens to hundreds of microns (especially for a foil) to one, some or tens of millimetres. Fibres are e.g. of PP, PE or polyester. As a mat, the fibres can be chemically (e.g. with adhesive material) or thermally bound or contain an inlay for additional strength. For the root cloth such binding is preferably absent, since it can obstruct the root growth too much.

A presently preferred design of the cloth is as follows: An externally facing UV resistant, tension resistant and slightly stretchable layer fibre mat (needled non woven web) of PP, e.g. approximately 5 mm thick, adapted to cut to make the pockets; next to it a gas permeable moisture retarding foil of e.g. approximately 20 micron thick; next to it a fibre mat (root cloth; non-woven "felt cloth") of PP, e.g. approximately 5 mm thick and able to hold and transport water and allowing ingrowth of plant roots; possibly next to it a fibre mat (e.g. with an inlay of thermally bound fibres) of e.g. approximately 5 mm thick or a woven cloth (e.g. geo textile) of e.g. approximately 0,5 mm thick, adapted to be glued onto the sub structure and offering additional strength.

The cloth or the assembly can in advance be provided with one or more (possibly embedded) conduits to connect to a water supply to supply water to the plants. These conduits can have spaced along their length dispensing apertures and can follow a torturous path. E.g. the conduits extend between the cloth and the sheet.

The cloth can be obtained by assembling separate layers, but also by directly manufacturing the cloth in the desired design from the raw materials. To assemble the separate layers, fastening techniques can be used such as screwing, gluing, stitching, nailing. Mutual fastening can be carried out locally (e.g. by way of spots or lines) or spread over a large surface. In case of local/spot wise fastening, usually two or more or all layers of the cloth will have no or substantially no mutual binding in the areas between the fastening locations. This applies particularly for the layer offering strength, and the layer in which the plant roots will grow.

The fastening in the cloth and/or between cloth and rigid sub structure is preferably such that it obstructs the growth of roots minimally. E.g. the spacing of the fastening locations is sufficiently large.

The cloth can be provided with fastening means (such as glue or weld spots or different binding means) in such a pattern, that the pockets are optimally provided. E.g. the fastening means are provided such that they limit areas next and above each other, which areas are each designed to provide a pocket. The fastening means can be provided along straight, curved or angled lines, to e.g. limit right angled, square, polygon, round, oval, diamond shaped areas. The fastening means are e.g. provided in two mutually crossing patterns of straight, mutually parallel lines. If these patterns mutually make an angle of 90 degrees, right angled or square areas are provided. Differs said angle from 90 degrees, diamond shaped areas are provided. If the lines of the patterns have identical spacing, the cloth is subdivided into areas of identical shape and dimension. The fastening means are possibly provided in two or more different patterns, possibly mutually crossing, of straight, curved or angled, possibly mutually parallel, lines, such that differently shaped areas are provided.

Thus, pockets can be provided e.g. vertically above and horizontally next to each other in the to the vertical wall fastened cloth.

Preferably one or more of the following features are applied:

The rigid/inflexible sheet has one or more of the following features: a thickness between about 0.5 and 2.5 cm; foam material, such as PVC foam sheet; contains (prefabricated) fastening holes for penetration of fastening means (e.g. bolts) for attachment to the substructure, wherein these holes are preferably provided by key holes that are vertically and/or horizontally oriented if the sheet is mounted to the vertical wall, and wherein these holes are preferably provided on a straight line extending centrally across the sheet, preferably equally spread across its complete length, possibly combined with at both sides key holes in a transverse orientation.

The cloth contains holes corresponding to the fastening holes in the sheet, provided by a hot object penetrating the cloth such that the cloth locally melts.

The cloth is mounted onto the sheet by mechanically fastening means that are formed during application, preferably such that cloth and sheet are caught/clamped between such fastening means or the fastening means holds itself to the sheet (e.g. by clamp or screw fit in a hole) and the cloth is caught/clamped between the fastener and the sheet. Preferably nails, staples or such (metal, preferably stainless steel) fastening means (hereafter: staples) are driven/shot into the sheet, preferably without twisting/rotation of the staple during applying. This staple (e.g. wire shaped fastening means) cuts itself through the sheet (for which the leg end can be sharpened), such that the sheet needs no preparation in advance to apply the staple. The staple is provided from the side of the cloth. At the side opposite the cloth an emboss is preferably used with which the from the sheet projecting end of the leg/legs of the staple are formed to make a hooking edge, engaging behind the sheet. The emboss can therefore bend the leg end outward or inward (which happens when stapling together paper sheets with an office stapling machine). On the other hand the emboss can force the leg end, such that its thickness increases. The end of the staple resting onto the side of the cloth opposite the sheet already has an in advance formed hooking edge (e.g. provided by a head or such thicker section), or is formed during application by e.g. bending or forcing of the leg end. The staple can have a U shape, such as known from an office stapling machine, the ends of both legs project from the opposite side of the sheet while the part bridging the in the sheet projecting legs provides the hooking edge engaging the cloth.

A convenient pattern of fastening locations for the cloth to the sheet is as follows (related to the case when mounted to the vertical wall): The fastening locations are substantially in line with horizontal and/or vertical lines, wherein a first group of fastening locations provide the corners of directly next to and below each other provided first rectangles and a second group fastening locations provide the corners of directly next to and below each other provided second rectangles, wherein the first and second rectangles have identical dimensions, the incision in the cloth for a plant fits completely within a second rectangle and partly, at the most, within a first rectangle while a corner of a first rectangle fits within a second rectangle, spaced from the incision. This pattern can be made by a machine with next to each other on a straight line to a common frame mounted staplers with an equal number of opposite embosses, mounted to the same frame, wherein said frame can be displaced in the machine cross direction. A sheet with on top of it a cloth is stepwise advanced longitudinally through the machine, alternatingly with large and small step. After activating of all staplers a (large/small) step follows whereafter the frame is displaced in machine cross direction, whereafter all staplers are activated. Thereafter a (small/large) step follows whereafter the frame returns in machine cross direction whereafter all staplers are activated, etc.

A mask is placed onto the assembly of sheet and cloth, provided with holes and slits corresponding to the fastening holes and incisions in the cloth for the plants. A knife is moved through the slits and a hot pin is pushed through the holes. Usually a limited number of the provided fastening holes will be used during mounting to the vertical wall.

The following qualities are preferably used for the layers: for the externally facing layer between 100 and 400 gr/m2 and/or between 2 and 5 mm thick; for the moisture retarding foil between 10 and 30 micron and/or of PE (polyethylene) or PP (polypropylene); for the root cloth between 400 and 1000 gr/m2 and/or of PA (polyacetal)/PE in combination, preferably not needled; for the fibre mat (preferably of PP) between 100 en 400 gr/m2 (e.g. between 2 and 7 mm thick), or in case of a woven cloth between 50 and 200 gr/m2. In stead of needling or thermal fixating, an inlay can be applied for each layer. E.g. the root cloth can be provided with an inlay, such that the fibre mat can be eliminated. The same is possible by using a root cloth prefabricated with a layer geo textile (so called layered composite structure).

All described features provide in isolation or in arbitrary combination the subject of the invention, also regardless of their arrangement in the claims.

## Claims

1. A prefabricated assembly of rigid/inflexible sheet or other body with large surface and mounted thereon a cloth, web, foil or such supple flexible and/or foldable element with large surface, wherein said element contains spaces for plant roots, or such spaces can easily be made therein by making incisions in said element, wherein preferably one side of the body is at least substantially completely covered by said element and the assembly possibly contains a conduit to connect to a water supply for the plants, to make a vertical garden.

2. Assembly according to claim 1, wherein said element has a layer offering the plants support and a layer allowing root growth therein, which latter layer is closer to the body, and wherein preferably between these two layers a gas permeable and/or moisture retarding layer is present.

3. Assembly according to claim 1 or 2, wherein the element has a layer with which it can be glued onto the body or another substructure and/or offers the element strength.

4. Assembly according to claim 1, 2 or 3, wherein a layer of the element that is cut for the roots is stretchable to offer additional space, and possibly the gas permeable/moisture retarding layer is cut.

5. Assembly according to any of the preceding claims, wherein the space for the roots is limited sideways and/or downwards by means, e.g. to provide pockets with preferably downward decreasing width.

6. Assembly according to any of the preceding claims, wherein the element is designed as follows: An externally facing UV resistant, tension resistant and slightly stretchable layer fibre mat, preferably needled non woven web of e.g. PP, e.g. approximately 5 mm thick; next to it a gas permeable moisture retarding foil of e.g. approximately 20 micron thick; next to it a fibre mat as root cloth, preferably non-woven "felt cloth" of e.g. PP, e.g. approximately 5 mm thick and able to hold and transport water and allowing ingrowth of plant roots; possibly next to it a fibre mat, e.g. with an inlay of thermally bound fibres of e.g. approximately 5 mm thick or a woven cloth, e.g. geo textile, of e.g. approximately 0,5 mm thick, adapted to be glued onto the sub structure and offering additional strength.

7. Assembly according to any of the preceding claims, wherein the element is provided with fastening means in such a pattern, that they limit areas next and above each other, which areas are each designed to provide a pocket, and the fastening means are provided along straight, curved or angled lines, to e.g. limit right angled, square, polygon, round, oval or diamond shaped areas.

8. Assembly according to any of the preceding claims, wherein the body contains mounting holes to mount to the substructure and the element has registered holes that are provided by penetration by a hot object, and/or the element is fastened to the body by mechanical fasteners that were deformed during application to hook or clamp relative to the body and/or element and made/enlarged a passage in the body by themselves.

9. Assembly according to any of the preceding claims, wherein the element is spot wise fastened to the body, wherein said locations/spots are substantially in line with horizontal and/or vertical lines, wherein a first group fastening locations provide the corners of directly next to and below each other provided first rectangles and a second group fastening locations provide the corners of directly next to and below each other provided second rectangles, wherein the first and second rectangles have substantially identical dimensions, the incision in the cloth for a plant fits completely within a second rectangle and partly, at the most, within a first rectangle while a corner of a first rectangle fits within a second rectangle, spaced from the incision.

10. Prefabricated element of large surface to make an assembly according to any of the preceding claims, or the use of a root cloth in a vertical garden.
